# EUROPÄISCHE PATENTSCHRIFT

(11) **EP 3 137 705 B1**
(45) Veröffentlichungstag und Bekanntmachung des Hinweises auf die Patenterteilung: **02.10.2019**
(21) Anmeldenummer: 15718918.4
(22) Anmeldetag: 29.04.2015
(51) Int. Cl.: E04B 5/32, E04B 5/48, E04F 15/12, E04F 15/18, E04F 15/20

(54) **3D-GEWEBE FÜR SCHWIMMENDE FUSSBODENKONSTRUKTIONEN**
3D FABRIC FOR FLOATING FLOOR STRUCTURES
TISSU EN 3D POUR CONSTRUCTIONS DE PLANCHER FLOTTANT

(30) Priorität: 30.04.2014 EP 14166726
(43) Veröffentlichungstag der Anmeldung: 08.03.2017
(73) Patentinhaber: Sika Technology AG, 6340 Baar (CH)
(72) Erfinder: HILGENBRINK, Bernhard, 48565 Steinfurt (DE)
(74) Vertreter: Sika Patent Attorneys
(86) Internationale Anmeldenummer: PCT/EP2015/059409
(87) Internationale Veröffentlichungsnummer: WO 2015/166002

(56) Entgegenhaltungen:
- EP-A1- 2 754 774
- EP-A2- 0 930 406
- DE-A1-102007 042 700

## Beschreibung

### Technisches Gebiet

Die Erfindung betrifft eine Bodenkonstruktion mit einem Estrich, der mit einem 3D-Textil bewehrt ist, ein Verfahren zur Herstellung der Bodenkonstruktion und die Verwendung des 3D-Textils als Bewehrung für einen Estrich.

### Stand der Technik

Übliche Estriche für das Bauwesen und ihre Verwendung werden in den Normen DIN EN 13318 und DIN 18560 beschrieben. Es handelt sich hierbei um Schichten, die direkt auf dem Untergrund, mit oder ohne Verbund, oder auf einer zwischenliegenden Trenn- oder Dämmschicht verlegt werden.

Estriche, die mit dem Untergrund verbunden sind, benötigen einen festen stabilen Untergrund und eine Schichtdicke von mindestens 10 mm. Ungebundene Estriche, die auf einer Trennschicht wie einer zweilagigen Polyethylenfolie, verlegt werden, benötigen einen festen Untergrund und eine Schichtdicke von mindestens 30 mm. Schwimmende Estriche auf weichen Schichten zur Schall- und/oder Wärmedämmung weisen eine Mindestdicke von 30 mm auf, bei Einsatz von Keramikfliesen als Bodenbelag abhängig von dem eingesetzten Binder Dicken von mindestens 40 bis 45 mm. Bei Sanierungen ist es häufig so, dass die Konstruktionsstatik nicht für solche Lasten und Schichtdicken ausgelegt ist.

Für ältere Bauwerke, insbesondere Mehrfamilienhäuser, kann z.B. eine Sanierung zur Trittschalldämmung nötig sein (vgl. 2006 International Building Code Chapter 12 interior environment section 1207 sound transmission). Es gibt hierfür auf dem Markt nur begrenzte Lösungen. Konstruktionen aus einer dünnen Trittschalldämmlage mit einem schwimmenden Estrich darüber werden z.B. in US 7096630 B1 und US 8146310 B2 beschrieben.

Handelsprodukte, die hierfür als trittschalldämmende Schichten geeignet sind, sind z.B. weber.floor® 4955 von Weber Saint Gobain, Deutschland, und die Quiet Qurl® RF Produkte von Keene Building Products, USA.

Nachteilig bei diesen Konstruktionen aus Trittschalldämmschicht und schwimmendem Estrich ist die erforderliche Bauhöhe, die in der Regel mindestens etwa 3 bis 4 cm beträgt (Dämmschichtdicke + etwa mindestens 2,5 cm Estrichschichtdicke). Bei solchen Konstruktionen, die für Wohnbauten geeignet sind, werden sehr dünne Dämmschichten eingesetzt, so dass größere Estrichdicken vermieden werden können. Der Trittschallschutz ist dann aber begrenzt. Sind dickere Schichten für den Schallschutz erforderlich oder muss der Boden für höhere Belastungen ausgelegt werden, müssen dickere Estrichschichten verlegt werden, um eine ausreichende Festigkeit zu erhalten.

Die Höhe der Konstruktion kann zu Problemen mit bereits installierten Systemen führen, wie z.B. mit Türhöhen, eingebauten Heizeinrichtungen wie Heizkörpern, Bodenabläufen, Waschbecken oder dem Abstand zwischen Boden und Decke.

Außerdem ist Estrich schwer. Ein 3 cm dicker Zementboden ergibt z.B. eine Belastung von etwa 60 kg/m². Das kann für alte Holzfussböden zu viel sein. Eine dünnere Konstruktion ergibt aber nicht die Biegezugfestigkeit für die gegebene Verkehrslast für Wohnhäuser. Um höheren Anforderungen gerecht zu werden, müssen dickere Dämmschutzschichten und dickere Estrichschichten verlegt werden.

Eine andere Lösung ist eine Kombination aus Trittschalldämmschicht und Trockenplatte. Als Trockenplatten können faserverstärkte Gipsplatten oder Holzplatten, wie Spanplatten oder OSB-Platten, eingesetzt werden. Eine solche Kombination kann relativ dünn verbaut werden. Nachteilig sind aber die geringe Schalldämmung und die begrenzte Belastbarkeit. Die für Büros und Gewerbebauten erforderliche Verkehrslast kann mit solchen Systemen nicht erreicht werden. Auch hier kann eine verbesserte Dämmung durch dickere Schalldämmschichten erreicht werden. Für höhere Belastungen müssen aus statischen Gründen dickere Trockenplatten eingesetzt werden. Dickere Schalldämmschichten und dickere Trockenplatten ergeben aber wiederum Probleme mit dem Gewicht und der Dicke der Gesamtkonstruktion.

Für den Einsatz als Dämmschichten in Bodenkonstruktionen sind verschiedene Dämmstoffe üblich. Mineralwolle ist z.B. feuerbeständig und verbessert die Wärme- und Schallisolierung. Aus diesen Gründen wird es in Baukonstruktionen verwendet. Entsprechende Produkte sind z.B. von Rockwool International A/S, Dänemark, Saint Gobain Isover G+H AG, Deutschland oder Ursa Deutschland, erhältlich.

Zum Schallschutz und teilweise zur Wärmeisolierung dienen z.B. auch PE-Schaum, Schaumgummi, elastisches Polyurethan, wie Polyurethan-Hartschaum, Latexschaum, Vliesstoffe und Filze aus organischen Fasern. Diese Dämmstoffe sind nicht feuerfest und können nur verwendet werden, wenn feuerbeständige Eigenschaften nicht erforderlich sind. Beispiele für Firmen, die Dämmprodukte aus diesen Materialien anbieten, sind z.B. Keenebuildings, Abrobo Sweden, Ball&Young Ltd. GB , Interfloor Ltd.GB mit der Marke TREDAIRE und Duralay.

Solche Dämmstoffe einschließlich Mineralwolle bilden weiche Schichten, so dass eine Lastverteilungsschicht installiert werden muss. Die Schichtdicke muss im Hinblick auf die Verkehrslast dimensioniert werden. Als Lastverteilungsschicht werden Estrich oder Trockenplatten eingesetzt. Auch hier besteht das Problem, dass der Estrich mit einer Dicke von mehreren cm verlegt werden muss. Trockenplatten können zwar mit einer geringen Dicke eingesetzt werden, die Belastbarkeit ist aber dann nur begrenzt.

EP 2754774 A1 betrifft eine Zwischenschicht für eine Belagskonstruktion, umfassend eine erste Schicht ausgebildet als Gittergewebe, bei der auf einer Seite eine zweite Schicht angeordnet ist, wobei auf der anderen Seite der ersten Schicht eine dritte Schicht ausgebildet als Gittergewebe vorliegen kann, die über Abstandshalter mit der ersten Schicht verbunden ist.

DE 102007042700 A1 betrifft ein Verfahren zur Herstellung eines Estrichs, der eine Gitterbewehrung aufweist, die über Abstandshalter positioniert wird, wobei in der zweiten Schichthälfte eine zweite Gitterstruktur angeordnet werden kann. In einer Ausführungsform können die beiden Gitterstrukturen durch Abstandshalter beabstandet werden. Dieses Dokument offenbart eine Bodenkonstruktion mit den Merkmalen des Oberbegriffs des Anspruchs 1 und ein entsprechendes Verlegeverfahren.

EP 0930406 A2 betrifft einen Unterboden mit einer Tragschicht, einer Dämmschicht und einer einer darauf aufgelegten Trennlage, auf der ein Estrich angeordnet ist, wobei die Trennlage ein Vlies, ein Gewebe, ein Gewirke oder Papier sein kann.

### Darstellung der Erfindung

Die Aufgabe der Erfindung bestand in der Lösung der vorstehend genannten Probleme im Stand der Technik. Insbesondere bestand die Aufgabe in der Bereitstellung einer Bodenkonstruktion, die in Abhängigkeit von der erforderlichen Belastbarkeit, eine möglichst dünne Bodenkonstruktion erlaubt. Eine solche dünne und leichte Bodenkonstruktion sollte vor allem auch für Dämmschichten enthaltende Bodenkonstruktionen ermöglicht werden. Desweiteren soll das System auch in einfacher Weise bei Sanierungen eingesetzt werden können.

Überraschenderweise wurde festgestellt, dass diese Probleme durch den Einsatz eines mit einem 3D-Textil bewehrten Estrichs gelöst werden konnten. Dementsprechend betrifft die Erfindung eine Bodenkonstruktion auf einem Untergrund umfassend einen Estrich mit einer Bewehrung aus einem 3D-Textil mit einer unteren und einer oberen Textillage, die mit einem oder mehreren Polfäden miteinander verbunden sind, wobei die untere Textillage in der unteren Hälfte des Estrichs und die obere Textillage in der oberen Hälfte des Estrichs angeordnet ist. Die Bodenkonstruktion ist vorzugsweise eine Fussbodenkonstruktion

Durch die erfindungsgemäße Bodenkonstruktion ist im Verhältnis zur erhaltenen Belastbarkeit eine sehr dünne Estrichschicht möglich. Dadurch kann die Aufbauhöhe reduziert werden und/oder der Einsatz dickerer Dämmschichten möglich werden. Wegen der relativ geringen Dicke und dem Einsatz einer leichten Bewehrung ergibt sich ein geringes Eigengewicht. Die geringe Schichtdicke führt auch zu kürzeren Trocknungszeiten.

Ferner werden durch das 3D-Textil die als Bewehrung dienenden Textillagen automatisch richtig positioniert. Der lagegenaue Einbau ist von besonderem Vorteil, da dies bei üblichen Bewehrungen im Allgemeinen nicht möglich ist. Der Estrich kann so in einem Arbeitsgang eingebaut werden, wodurch die Arbeitszeit verkürzt wird. Die Bodenkonstruktion eignet sich sowohl für den Neubau als auch für eine Sanierung.

Die Erfindung betrifft auch ein Verfahren zur Herstellung der Bodenkonstruktion sowie die Verwendung des 3D-Textils als Bewehrung in einem Estrich in einer Bodenkonstruktion. Die bevorzugten Ausführungsformen der Erfindung sind in den abhängigen Ansprüchen wiedergegeben. Im Folgenden wird die Erfindung ausführlich erläutert.

### Kurze Beschreibung der Zeichnungen

Fig. 1a und 1b zeigen ein für die Erfindung geeignetes 3D-Textil in zwei unterschiedlichen Ansichten.
Fig. 2a und Fig. 2b zeigen schematisch die Verstärkungswirkung in der Bodenkonstruktion bei mittiger und randständiger Belastung.
Fig. 3 zeigt ein 3D-Textil, bei dem an einer Textillage ein Faservlies angeklebt ist.
Fig. 4a-c zeigen mögliche Ausführungsformen für Überlappungsbereiche von zwei aneinanderstoßenden 3D-Textilien.
Fig. 5 zeigt eine Zwischenstufe bei der Herstellung der erfindungsgemäßen Bodenkonstruktion.

### Weg zur Ausführung der Erfindung

Begriffe, die im Zusammenhang mit Estrichen verwendet werden, werden in der DIN EN 13318:2000-12 erläutert. Hierauf wird Bezug genommen, sofern nicht anders angegeben. 3D wird hier wie üblich als Abkürzung für dreidimensional verwendet.

Der Polfaden verbindet und beabstandet die Textillagen, die z.B. aus Kette und Schuss gebildet sind, und bildet so mit den Textillagen ein dreidimensionales Gebilde, bei dem die Textillagen beabstandet und im wesentlichen parallel zueinander angeordnet sind. Polfäden werden auch als Abstandsfäden bezeichnet.

Als Untergrund für die Bodenkonstruktion eignen sich prinzipiell alle üblichen tragenden Untergründe, wie Beton, Metall, Holz, Fliesen, Asphalt oder bereits bestehende Kunstharzbeschichtungen oder Estriche. Metalluntergründe finden sich z.B. im Schiffsbau. Der Untergrund kann wie üblich vorbehandelt sein, z.B. durch Schleifen, Sandstrahlen, Ablaugen, Grundieren und/oder Kratzspachteln.

Die erfindungsgemäße Bodenkonstruktion umfasst einen Estrich mit einer Bewehrung aus einem 3D-Textil. Das 3D-Textil weist zwei Textillagen auf, die mit einem oder mehreren Polfäden miteinander verbunden sind. Bevorzugt ist ein 3D-Gewebe. Diese 3D-Texilien werden auch als 3D-biaxiale Textilien bzw. 3D-biaxiale Gewebe oder 3D-biaxiale Flachgewebe bezeichnet. Eine andere Bezeichnung für 3D-Textilien sind Abstandstextilien bzw. Abstandsgewebe.

Die Textillagen sind flächig bzw. biaxial. Die beiden Textillagen des 3D-Textils können gleich oder verschieden sein und liegen parallel zueinander. In der Regel handelt es sich um gleiche Texillagen. Die Textillagen sind vorzugsweise selbsttragend. Die beiden Textillagen bilden eine doppellagige Bewehrung im Estrich, wobei die Lage der Bewehrung durch den Abstand der Textillagen voneinander eingestellt bzw. vordefiniert werden kann.

Die Bezeichnung als untere und obere Textillage des 3D-Textils bezieht sich auf die Position der jeweiligen Textillage als Bewehrung im Estrich, wobei naturgemäß die untere Textillage näher zum Untergrund angeordnet ist als die obere Textillage. Angaben zur Textillage beziehen sich hier sowohl auf die untere als auch die obere Textillage, sofern nicht ausdrücklich anders angegeben.

Die Textillagen können z.B. ein Gewebe, ein biaxiales Gitter oder ein Gelege sein. Bevorzugt handelt es sich bei den Textillagen um ein Gewebe oder ein biaxiales Gitter.

Die Textillagen sind aus Fasern bzw. Strängen von Fasern aufgebaut. Die Fasern sind bevorzugt nicht oder wenig flexibel. Beispiele für geeignete Fasern sind Fasern aus Glas, Basalt, organischem Polymer oder Carbon und Kombinationen davon, wobei Glasfasern bevorzugt sind. Als organische Polymerfasern oder Kunstfasern können z.B. Polethylenterephthalatfasern und insbesondere Aramidfasern genannt werden. Als Glasfasern sind z.B. alkalibeständige AR-Glasfasern geeignet. Die Glasfasern können z.B. in Form von Glasrovings eingesetzt werden.

Die Kraftaufnahme bzw. armierende Wirkung der Textillagen können z.B. durch Art, Dichte, Menge und Winkellage der Faserstruktur eingestellt werden.

Die Fasern, insbesondere Glasfasern, können gegebenenfalls mit einer Schutzschicht versehen sein. Die Schutzschicht kann z.B. zweckmäßig sein, um die Fasern vor einem chemischen Angriff durch für den Estrich verwendete Komponenten zu schützen, was von der Art der Fasern und der Art der Estrichkomponenten abhängen kann. Die Fasern, insbesondere die Glasfasern, können z.B. mit einer Schutzschicht aus einer Polymerzusammensetzung, z.B. einem Epoxidharz, einer Latex, einem Acrylatharz, einer Acrylatdispersion oder einem Polyurethan, versehen sein, wobei Acrylatharze bzw. Acrylatdispersionen bevorzugt sind, die z,B. einen alkalisch resistenten Film auf dem Textil bilden können.

Die beiden Textillagen sind mit einem oder mehreren Polfäden miteinander verbunden, so dass eine drucksteife Verbindung der beiden Textilllagen erhalten werden kann. Die eingesetzten Polfäden sind gewöhnlich aus relativ flexiblen Fasern, z.B. aus Polyester. Der bzw. die Polfäden dienen zur Verbindung der beiden Textillagen und als Abstandshalter zwischen den beiden Textillagen.

Ein Vorteil des 3D-Textils besteht daher darin, dass der Abstand der beiden Textillagen nach Bedarf eingestellt werden kann. Der Abstand der beiden Textillagen bzw. die Dicke des eingesetzten 3D-Textils hängt dabei naturgemäß von der Estrichdicke ab. In der Regel weisen die Textillagen einen Abstand von mindestens 3 mm, bevorzugt mindestens 4 mm auf. Der Abstand der beiden Textillagen des 3D-Textils kann z.B. im Bereich von 4 bis 35 mm, bevorzugt von 5 bis 28 mm und bevorzugter von 10 bis 15 mm liegen. Der Abstand der beiden Textillagen ist insbesondere gleich oder kleiner als die Dicke des Estrichs.

Die Kraftaufnahme bzw. Druckfestigkeit des 3D-Textils kann durch Art, Menge, Dichte und Winkellage der Polfäden eingestellt werden. Das 3D-Textil ist bevorzugt elastisch. Wenn das 3D-Textil auf den Boden gelegt wird und eine Person darüber geht, wird das 3D-Textil durch die Belastung vorübergehend komprimiert, nach Wegfall der Belastung kehrt es aber wieder in die ursprüngliche Struktur zurück. Dies ist vorteilhaft, da ein Handwerker sich bei der Installation des 3D-Textils und des nachfolgenden Einbaus des Estrichs auf dem 3D-Textil bewegen kann, ohne es zu beschädigen.

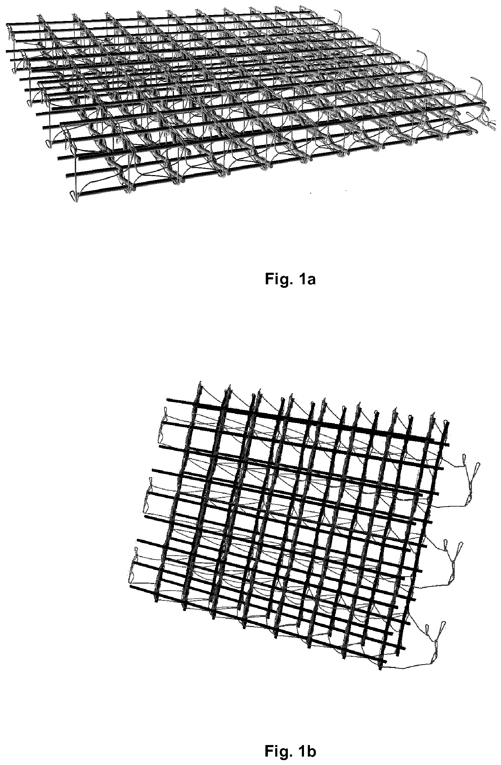

In den Fig. 1a und 1b sind ein für die Erfindung geeignetes 3D-Textil gezeigt. 3D-Textilien sind im Handel erhältlich, z.B. von V. Fraas Solutions in Textile GmbH, Deutschland, z.B. unter der Marke Sitgrid®. Die 3-D-Textilen können in Form von Platten oder Bahnen bzw. aufgerollten Bahnen vorliegen.

In der Bodenkonstruktion ist das 3D-Textil im Estrich so angeordnet, dass die näher am Untergrund befindliche Textillage, d.h. die untere Textillage, in der unteren Hälfte des Estrichs und die obere Textillage in der oberen Hälfte des Estrichs angeordnet ist. Es versteht sich, dass sich untere und obere Hälfte auf die Schichtdicke des Estrichs beziehen. Beispielsweise liegt bei einer Estrichschichtdicke von 10 mm die untere Hälfte des Estrichs bei Schichthöhen von 0 bis unter 5 mm und die obere Hälfte des Estrichs bei Schichthöhen von über 5 bis 10 mm. Entsprechend wäre das untere Viertel dieses Estrichs bei Schichthöhen von 0 bis 2,5 mm und das obere Viertel bei Schichthöhen von 7,5 bis 10 mm.

Die untere Textillage ist bevorzugt im unteren Drittel des Estrichs, bevorzugter im unteren Viertel des Estrichs angeordnet. Die obere Textillage ist bevorzugt im oberen Drittel des Estrichs, bevorzugter im oberen Viertel des Estrichs angeordnet. Die obere und untere Textillage sind insbesondere noch im Estrichmaterial eingebunden oder eingebettet oder vom Estrichmaterial ummantelt.

In einer bevorzugten Ausführungsform befindet sich die untere Textillage am Boden des Estrichs. Es ist ferner bevorzugt, dass die obere Textillage an der bzw. nahe an der oberen Oberfläche des Estrichs angeordnet ist. Die obere Textillage kann sich direkt an der oberen Oberfläche des Estrichs befinden, aus optischen Gründen und um eine glatte Oberfläche zu erhalten, wird sie vorzugsweise noch von dem Estrich bedeckt. Die obere Textillage ist bevorzugt so angeordnet, dass die noch über der oberen Textillage verbleibende Estrichschicht 0 bis 5 mm oder 0 bis 4 mm, bevorzugt 0 bis 3 mm und besonders bevorzugt 0,5 bis 3 mm ausmacht. Es versteht sich, dass alle vorstehend genannten bevorzugten Positionen für die oberen und unteren Textillagen auch in Kombination miteinander gelten.

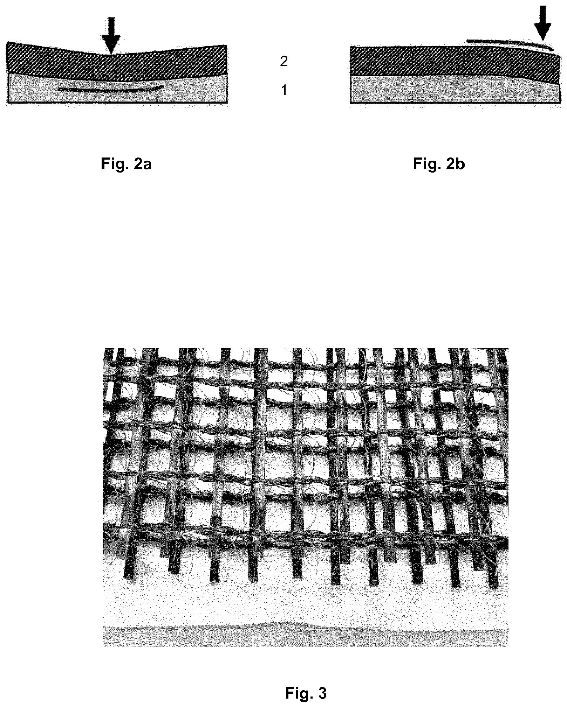

Durch die Bewehrung im unteren und im oberen Bereich des installierten Estrichs wird die Verstärkung der Konstruktion deutlich verbessert. Fig. 2a und Fig. 2b (3D-Textil nicht abgebildet) zeigen schematisch die Verstärkungswirkung der erfindungsgemäßen Bewehrung, wenn ein Estrich 2 über einer weichen Schicht wie einer Dämmschicht 1 angeordnet ist. Wenn die Konstruktion in der Mitte belastet wird (Fig. 2a), wird die untere Bewehrung bzw. Textillage beansprucht und nimmt die Kraft auf. Wenn die Konstruktion am Rand oder einer Ecke belastet wird (Fig. 2b), wird die obere Bewehrung bzw. Textillage beansprucht und nimmt die Kraft auf. In den Fig. 2a und 2b zeigen die Linien die Verstärkung der Bewehrungslagen schematisch und wurden zur besseren Sichtbarkeit etwas aus der Estrichschicht verschoben.

Da das 3D-Textil eine geringere Dichte als die verwendeten Materialien für den Estrich aufweist, schwimmt das Textil beim Einbau des Estrichs teilweise auf, was zu einer unebenen Oberfläche führen kann. In einer bevorzugten Ausführungsform, wird daher das 3D-Textil an einer darunterliegenden Lage bzw. Schicht in der Bodenkonstruktion fixiert, zum Beispiel durch Kleben oder Antackern, bevor das 3D-Textil mit dem Material für den Estrich verfüllt wird. Auf diese Weise kann ein Aufschwimmen des 3D-Textils vermieden werden.

In einer besonders bevorzugten Ausführungsform wird an der einen Textillage des 3D-Textils, die in der Bodenkonstruktion die untere Textillage darstellt, ein flächiges Material befestigt. Die Befestigung des flächigen Materials an der Textillage kann auf übliche Weise erfolgen, z.B. durch Annähen, Antackern oder Kleben, wobei Kleben bevorzugt ist. Zum Verkleben eignet sich z.B. ein Dispersionsklebstoff.

Das flächige Material kann z.B. als Bogen, Bahn, Platte, Folie oder Matte vorliegen. Das flächige Material kann aus jedem beliebigen Material sein. Es kann sich z.B. um flächige Materialien handeln, die in solchen Bodenkonstruktionen üblicherweise als Trennschichten bzw. Trennlagen eingesetzt werden. Bei dem flächigen Material kann sich z.B. um Kunststofffolien, Papier, wie bitumengetränktes Papier, oder Faservliese handeln, wobei Faservliese bevorzugt sind. Beispiele für bevorzugte Faservliese sind Glasvliese oder Rohglasvliese, und Polymerfaservliese, z.B. aus Polyester, Polyamid, Polyethylen (PE), Polypropylen (PP), PE/PP-Copolymeren oder Mischungen davon. Besonders gute Ergebnisse werden mit Polypropylenfaservliesen erzielt, z.B. TYPAR®SF 20 von Dupont, Faservlies aus thermisch verfestigten PP-Endlosfasern mit einem Flächengewicht von 68 g/m².

Faservliese sind als flächiges Material besonders geeignet, da sie robust sind, so dass die Gefahr der Beschädigung bei der Befestigung und anschließender Installation verringert ist. Außerdem können Faserfliese z.B. durch Kleben gut und fest an der Textillage befestigt werden. Das Faservlies weist bevorzugt ein Flächengewicht von 20 bis 200 g/m², bevorzugter von 30 bis 80 g/m², auf. Fig. 3 zeigt ein 3D-Gewebe, bei dem an einer Textillage ein Faservlies angeklebt ist.

Wenn das 3D-Textil mit dem an der unteren Textillage befestigten flächigen Material auf den Untergrund oder auf einer auf dem Untergrund befindlichen Schicht mit dem flächigen Material nach unten verlegt ist und anschließend das Material für den Estrich aufgebracht wird, fließt das Material mit seiner hohen Dichte durch das 3D-Textil auf das daran befestigte flächige Material und drückt so das 3D-Textil auf die darunterliegende Schicht. Auf diese Weise schwimmt das 3D-Textil nicht auf und es wird ein Estrich mit einer glatten Oberfläche erhalten. Auf diese Weise kann in einem Schritt der Estrich aufgebracht werden, der ohne weitere Vorbehandlung mit einem üblichen Bodenbelag bedeckt werden kann. Durch die Befestigung des flächigen Materials unter der unteren Textillage wird auch sichergestellt, dass die untere Textillage am Boden des Estrichs angeordnet ist.

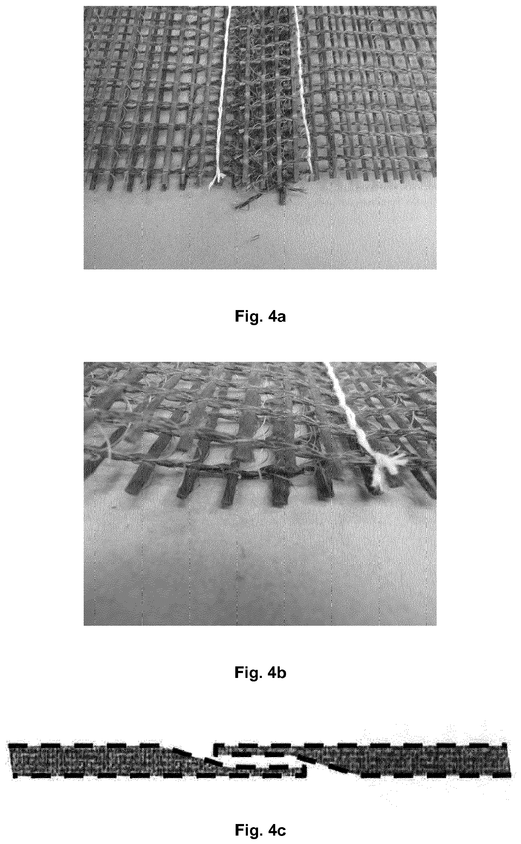

Für die Überlappung der 3D-Textilien, die aneinanderstoßen, können die 3D-Textilien verbunden werden, z.B. durch Verkleben, Heißschmelzkleben, Abnähen (Fig. 4a und 4b). Eine andere Möglichkeit ist, dass der oder die Polfäden an den Rändern des 3D-Textils zwischen den Textillagen nicht angebracht oder entfernt werden. Auf diese Weise kann im Überlappungsbereich die gleiche Höhe wie im ganzen 3D-Textil beibehalten werden. Fig. 4c zeigt einen solchen Überlappungsbereich für zwei aneinanderstoßende 3D-Textilien.

Das 3D-Textil ist in der Bodenkonstruktion als Bewehrung in einen Estrich eingebettet. Der Estrich kann durch die eingesetzte Bewehrung im Verhältnis zu der damit erreichbaren Belastbarkeit ausgesprochen dünn sein. Der Estrich weist z.B. ein Schichtdicke von 5 bis 40 mm, bevorzugt von 5 bis 25 mm und besonders bevorzugt von 10 bis 15 mm auf.

Der erfindungsgemäß bewehrte Estrich kann in den allgemein üblichen Estrichbauarten eingesetzt werden. Der bewehrte Estrich kann z.B. ein Verbundestrich, ein Estrich ohne Verbund oder ein schwimmender Estrich sein. Beim Verbundestrich ist der Estrich mit dem tragenden Untergrund verbunden. Beim Estrich ohne Verbund ist der Estrich nicht mit dem tragenden Untergrund verbunden. Der Estrich ohne Verbund kann ein Estrich auf Trennschicht sein, bei dem der Estrich auf einer Trennschicht verlegt wird, die auf dem Untergrund gelegt worden ist. Der Estrich ohne Verbund kann ein schwimmender Estrich sein, bei dem der Estrich auf einer Dämmschicht verlegt wird, die über dem Untergrund angeordnet ist. Ein schwimmender Estrich ist gewöhnlich vollständig von allen aufgehenden Bauteilen, wie z.B. Wände oder Rohre, getrennt.

In einer bevorzugten Ausführungsform ist der erfindungsgemäß bewehrte Estrich ein schwimmender Estrich auf einer Dämmschicht. Als Randbegrenzung z.B. an den Wänden können z.B. zusammendrückbare Kunststoffstreifen eingesetzt werden. Um ein Eindringen von Wasser und Estrichmaterial wie Zementleim in die Dämmschicht zu vermeiden, kann diese vor dem Einbau des Estrichs mit einer Trennschicht, z.B. einer Folie wie einer Polyethylenfolie, abgedeckt werden.

Für den Estrich kann jedes übliche Estrichmaterial verwendet werden. Es kann z.B. ein Mörtel wie ein Estrichmörtel oder eine Spachtelmasse eingesetzt werden. Das Estrichmaterial, insbesondere der Mörtel oder die Spachtelmasse, ist vorzugsweise ein selbstnivellierendes Estrichmaterial. Das Estrichmaterial wie Mörtel oder Spachtelmasse ist vorzugsweise bei der Verarbeitung fließfähig.

Das Estrichmaterial, insbesondere Mörtel oder Spachtelmasse, enthält ein Bindemittel. Es können alle üblichen Bindemittel eingesetzt werden. Beispiele für geeignete Bindemittel sind Zement, wie Portlandzement oder Aluminatzement, Anhydritbinder, Reaktionsharze, wie Epoxidharz, Polyurethane und SMP (silanmodifizierte Polymere), und Kombinationen dieser Bindemittel. Weitere mögliche Bindemittel sind Gussasphalt, Magnesia, Bitumenemulsion-Zement-Mischungen oder Calciumsulfat.

Bei den Reaktionsharzen, die häufig als zwei- oder mehrkomponentige Systeme vorliegen, ergibt sich die Härtung durch die chemische Reaktion der Komponenten. Bei den anorganischen Bindemitteln erfolgt die Härtung gewöhnlich durch die bei Zugabe des Anmachwassers erfolgenden Reaktion.

Das Estrichmaterial, insbesondere der Mörtel oder die Spachtelmasse, können weitere Additive enthalten, insbesondere Zuschläge, wie z.B. Sand oder Silica oder gegebenenfalls Hartstoffe oder Verstärkungsfasern, z.B. Glasfasern, sowie gegebenenfalls ein oder mehrere Zusatzmittel oder Zusatzstoffe. Beispiele für Zusatzmittel sind Luftporenbildner, Verflüssiger, Fließmittel oder Verzögerer. Fließmittel oder Verflüssiger eignen sich, um z.B.das Estrichmaterial weicher oder fließfähiger zu machen. Es können auch farbgebende Mittel, wie Pigmente, zum Estrichmaterial gegeben werden, um einen farbigen Estrich zu erhalten.

Der erhaltene bewehrte Estrich ist z.B. ein Zementestrich, eine kunstharzmodifizierte Zementestrich, ein Bitumenemulsionsestrich, ein Kunstharzestrich, ein Calciumsulfatestrich, ein Gussasphaltestrich, ein Magnesiaetsrich oder ein Anhydritestrich, wobei Zementestriche, kunstharzmodifizierte Zementestriche, Kunstharzestriche, Calciumsulfatestriche und Anhydritestriche bevorzugt sind. Bevorzugt wird ein Fließestrich verwendet.

In einer besonders bevorzugten Ausführungsform umfasst die Bodenkonstruktion wie bereits erwähnt eine Dämmschicht, die zwischen dem Untergrund und dem bewehrten Estrich angeordnet ist. Die Dämmschicht kann ein-, zwei- oder mehrlagig ausgebildet sein. Die Dämmschicht wird z.B. wie üblich direkt auf den Untergrund aufgebracht. Es können aber gegebenenfalls z.B. ein oder mehrere Trennlagen bzw. Trennschichten zwischen Untergrund und Dämmschicht angeordnet werden.

Ein Vorteil der Erfindung ist wie bereits erläutert, dass der Estrich sehr dünn ausgebildet werden kann. Dadurch kann die Bodenkonstruktion insgesamt dünner ausgelegt werden. Diese Höhenersparnis kann auch zumindest teilweise dazu genutzt werden, um eine dickere Dämmschicht einzubauen, um so eine bessere Schall- und/oder Wärmedämmung und/oder einen besseren Feuerschutz zu erreichen.

Die Dämmschicht kann z.B. in Form von Platten, Matten oder Bahnen aus geeigneten Dämmstoffen eingebaut werden. Wie bereits vorstehend erläutert, kann über der Dämmschicht gegebenenfalls eine Dämmschichtabdeckung aufgebracht werden, um ein Eindringen von Wasser und Estrichmaterial in die Dämmschicht zu vermeiden. Die Dämmschichtabdeckung kann eine Trennschicht wie eine Folie, z.B. eine Polyethylenfolie, sein.

Die Dämmschicht ist eine übliche Schicht in solchen Bodenkonstruktionen und dient zur Schall- und/oder Wärmedämmung und/oder zum Feuerschutz. Für den Feuerschutz ist der Einsatz feuerbeständiger Materialien, wie z.B.

Mineralwolle, erforderlich. Eine wichtige Funktion der Dämmschicht ist häufig die Trittschalldämmung.

Geeignete Dämmstoffe für solche Dämmschichten sind z.B. PE-Schaum, Schaumgummi, elastisches Polyurethan, wie Polyurethan-Schaum, Latexschaum, Vliesstoffe und Filze aus organischen Fasern, PolystyrolSchaum (EPS), Mineralwolle, wie Steinwolle oder Glaswolle, und Holzweichfaserplatten. Besonders bevorzugt ist Mineralwolle. Mineralwolle ist feuerbeständig und bietet daher zusätzlich Feuerschutz. Die Dämmschicht ist bevorzugt eine Mineralwoll-Dämmschicht.

Die Bodenkonstruktion kann ferner einen Bodenbelag über dem Estrich und/oder mindestens eine Trennschicht und/oder eine Bodenheizung, insbesondere eine Fussbodenheizung, umfassen. Der erhaltene Estrich kann eine glatte Oberfläche aufweisen und ist gegebenenfalls so wie er ist als Deckschicht für den Boden geeignet. In der Regel wird aber wie üblich noch ein Bodenbelag auf dem Estrich aufgebracht. Es können alle üblichen Bodenbeläge eingesetzt werden, z.B. Keramik-, Naturstein-, Boden- oder Parkettbeläge.

Falls gewünscht, kann die Bodenkonstruktion eine Bodenheizung, insbesondere eine Fussbodenheizung, umfassen. Diese kann wie üblich unter dem Estrich, bevorzugt zwischen Dämmschicht und Estrich, oder über dem Estrich, bevorzugt zwischen Estrich und Bodenbelag, angeordnet werden. Es handelt sich bevorzugt um eine elektrische Bodenheizung, insbesondere eine elektrische Fussbodenheizung. Dabei werden z.B. elektrische Kabel bzw. Widerstandsleiter oder Folien mit eingearbeiteten elektrischen Kabeln bzw. Widerstandleitern unter dem Estrich, bevorzugt zwischen Dämmschicht und Estrich, oder über dem Estrich, bevorzugt zwischen Estrich und Bodenbelag, angeordnet. Dies kann auf übliche Weise erfolgen, indem z.B. die elektrische Bodenheizung bzw, Fußbodenheizung auf die Dämmschicht verlegt wird und anschließend der bewehrte Estrich wie vorstehend beschrieben verlegt wird oder indem sie auf den verlegten bewehrten Estrich verlegt wird und anschließend der Bodenbelag verlegt wird.

In einer besonders bevorzugten Ausführungsform umfasst die Bodenkonstruktion auf einem Untergrund einen Estrich mit einer Bewehrung aus einem 3D-Textil mit einer unteren und einer oberen Textillage, die mit einem oder mehreren Polfäden miteinander verbunden sind, wobei an der unteren Textillage ein flächiges Material, bevorzugt ein Faservlies, befestigt ist und die untere Textillage am Boden des Estrichs und die obere Textillage in der oberen Hälfte des Estrichs, bevorzugt im oberen Viertel des Estrichs, angeordnet ist, wobei zwischen dem Untergrund und dem bewehrten Estrich eine Dämmschicht, bevorzugt eine Mineralwoll-Dämmschicht, angeordnet ist.

Die Bodenkonstruktion kann auch eine oder mehrere Trennschichten bzw. Trennlagen umfassen. Beispiele für zweckmäßige Positionen in der Bodenkonstruktion und ihre Funktion wurden vorstehend erläutert. Gebräuchlich eingesetzte Trennlagen bzw. Trennschichten sind z.B. Kunststofffolien, wie Polyethylenfolien, Papier, wie bitumengetränktes Papier, oder Faservliese, wie Rohglasvliese.

Die Bodenkonstruktion eignet sich vorzugsweise als Fussbodenkonstruktion. Die Bodenkonstruktion eignet sich insbesondere für Wohnbauten, öffentliche Bauten, Industrie- und Gewerbebauten oder Schiffe.

Die Erfindung betrifft auch ein Verfahren zur Herstellung einer Bodenkonstruktion auf einem Untergrund wie vorstehend erläutert. Das Verfahren umfasst a) das Verlegen des 3D-Textils auf dem Untergrund oder auf einer über dem Untergrund befindlichen Schicht und b) das Verfüllen des 3D-Textils mit einem Estrichmaterial und Aushärten zur Bildung des bewehrten Estrichs. Die vorstehenden Angaben zur Bodenkonstruktion gelten entsprechend für das Verfahren.

Das Estrichmaterial ist bevorzugt ein Mörtel oder eine Spachtelmasse und bevorzugt selbstnivellierend. Das Estrichmaterial wird wie vorstehend erläutert in der Regel durch Vermischen der Komponenten bei reaktionsfähigen Harzen und/oder Zugabe von Wasser vorbereitet. Das Estrichmaterial ist vorzugsweise fließfähig. Das frische noch verarbeitbare Estrichmaterial (Frischmörtel) wird auf das verlegten 3D-Textil aufgebracht, vorzugsweise durch Gießen, und verfüllt so das 3D-Textil. Auf diese Weise erfolgt eine Einbettung des 3D-Textils in dem Estrichmaterial. Nach dem Aushärten des Estrichmaterials wird der bewehrte Estrich auf dem Untergrund oder auf der über dem Untergrund befindlichen Schicht erhalten.

Wenn der bewehrte Estrich direkt auf dem Untergrund verlegt wird, wird ein Verbundestrich erhalten. Vor dem Verlegen des Estrichs kann mindestens eine Trennschicht wie eine Folie auf dem Untergrund platziert werden. In diesem Fall wird ein bewehrter Estrich auf einer Trennschicht erhalten.

Vorzugsweise wird vor dem Verlegen des 3D-Textils eine Dämmschicht auf den Untergrund oder auf einer über dem Untergrund befindlichen Schicht, wie einer Trennschicht, vorzugsweise direkt auf dem Untergrund, verlegt. Auf die Dämmschicht wird gegebenenfalls eine Dämmschichtabdeckung angeordnet. Der bewehrte Estrich wird dann auf die Dämmschicht, die gegebenenfalls die Abdeckung aufweist, verlegt. In diesem Fall wird ein schwimmender Estrich auf der Dämmschicht erhalten.

Bei einem bevorzugten Verfahren wird wie erläutert ein flächiges Material, insbesondere ein Faservlies, an der unteren Textillage des 3D-Textils befestigt. Die Befestigung erfolgt bevorzugt durch Kleben, z.B. mit einem Dispersionsklebstoff. Die Befestigung der Textillage an das flächige Material kann durchgeführt werden, indem das flächige Material auf dem Untergrund, der Trennlage oder der Dämmschicht verlegt wird und dann das 3D-Textil über die untere Textillage darauf befestigt wird. Vorzugsweise wird das flächige Material zuvor auf einer Textillage des 3D-Textils befestigt und das 3D-Textil dann mit dem daran befestigen flächigen Material nach unten auf den Untergrund, die Trennschicht oder die Dämmschicht verlegt.

Die Erfindung betrifft auch die Verwendung eines 3D-Textils mit zwei Textillagen, die mit einem oder mehreren Polfäden miteinander verbunden sind, als Bewehrung in einem Estrich in einer Bodenkonstruktion. Die vorstehenden Angaben zur Bodenkonstruktion gelten entsprechend für die Verwendung.

Im folgenden wird die Erfindung durch Beispiele weiter erläutert, die die Erfindung aber in keiner Weise beschränken sollen.

### Beispiele

### Beispiel 1 - Anwendungstest

In dem Versuch wurde ein 3D-Textil gemäß Fig. 1a/Fig. 1b, an dem an einer Textillage ein Faservlies gemäß Fig. 3 geklebt war, verwendet. Es handelt sich um ein 3D-Gewebe von 12 mm Dicke und mit einem Flächengewicht von ca. 700g/m². Die beiden Textillagen waren Glasfasergewebe. Dabei waren die Ober- und Unterglasfasergewebe gleich in Material, Dichte und Art. Auf einem Glasfasergewebe wurde ein Faservlies verklebt, so dass folgender Aufbau erhalten wurde: Polypropylenfaservlies von 68 g/m², darauf verklebt 1 mm Glasfasergewebe, 10 mm Zwischenraum durch Polfäden abgestützt und 1 mm Glasfasergewebe auf der Oberseite.

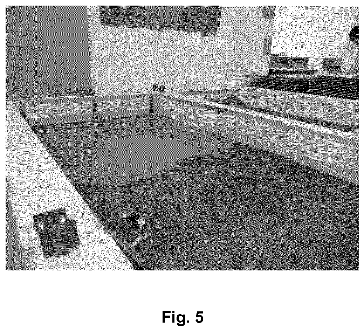

In einem Raum von 2 x 4 m wurde eine Bodenkonstruktion verlegt, um Belastungen im Raum zu prüfen, wie sie z.B. durch ein schweres Bücherregal in einer Ecke auftreten können. Auf den Untergrund und entlang den Wänden wurde eine trittschalldämmende Dämmschicht (12 mm dicke Mineralwoll-Platten von der Firma Rockwool) verlegt. Die Ränder und Fugen zwischen den Platten wurden mit einem Haftband abgeklebt, um zu vermeiden, dass das selbstnivellierende Estrichmaterial zwischen die Platten fließt. Auf die Dämmschicht wurde das beschriebene 3D-Gewebe, an dem an einer Textillage das Faservlies geklebt war, mit dem Faservlies nach unten gelegt. Anschließend wurde eine mit Wasser vermischte faserverstärkte, calciumsulfatgebundene Spachtelmasse (Schönox®APF von Schönox GmbH, Deutschland) auf die Konstruktion gegossen und das 3D-Textil damit verfüllt. Der nach der Härtung erhaltene Estrich hatte eine Dicke von ca. 14 mm und wies eine glatte Oberfläche auf. Fig. 5 zeigt eine Zwischenstufe bei der Herstellung, bei der das 3D-Textil bereits teilweise mit dem Estrichmaterial verfüllt bzw. darin eingebettet ist.

Der ausgehärtete Estrich wurde an den Ecken des Raums einem Belastungstest unterworfen. Hierfür wurde 10 Tage nach Herstellung an einer Ecke ein Holzbrett auf 4 Metallzylindern (Druckfläche 4 x 706 mm²) aufgestellt und mit 100 kg belastet. Nach 1 h wurde das Gewicht auf 200 kg erhöht, nach einer weiteren Stunde auf 300 kg und nach einer weiteren Stunde schließlich auf 500 kg erhöht. Dies ergab eine Belastung von 17,0 kN/m². Während des Belastungstests wurde die Verformung des Estrichs mit einem Sensor in mm/m bestimmt. Die Verformung der Oberfläche betrug maximal 2,5 mm/m. Es wurde keine Rissbildung beobachtet.

### Beispiel 2

Beispiel 1 wurde wiederholt, außer dass anstelle des Estrichmaterials Schönox®APF eine zementbasierte Spachtelmasse (Schönox®FPL Plus von Schönox GmbH, Deutschland) verwendet wurde. Es wurde eine glatte Oberfläche erhalten. Es wurden Belastungstests wie in Beispiel 1 beschrieben durchgeführt, wobei ähnliche Verformungswerte wie in Beispiel 1 erhalten wurden.

### Schalldämmungsprüfung

### Beispiel 3

Auf einer Prüffläche von ca. 1 m² wurde eine Bodenkonstruktion verlegt. Zuerst wurde eine 15 mm dicke Mineralwolle, 0,92 kg/m² (Isover akustik®) auf die Prüffläche aufgebracht. Darauf wurde ein mit einem 3D-Gewebe bewehrter Estrich (Estrichmaterial: Schönox®APF), 30,94 kg/m², verlegt. Es wurde lose verlegt. Der Estrich wurde leicht geschüsselt auf 8 mm und mit ca. 110 kg beschwert.

Die Trittschallminderung wurde gemäß ISO 10140:2010 (alle Teile) nach Kategorie II geprüft. Der Test ermittelt die Minderung des übertragenen Trittschalls durch eine Deckenauflage auf einer schweren Bezugsdecke. Weitere Grundlagen sind EN ISO 717:2013-06 und DIN 18560:2009-09. Die Prüffläche weicht von der Forderung der Kategorie II ab. Senderaum und Empfangsraum hatten jeweils eine Lufttemperatur von 20°C und eine Luftfeuchte von 56%. Die Ergebnisse sind in nachfolgender Tabelle wiedergegeben.

### Beispiel 4

Das Beispiel 3 wurde wiederholt, außer dass die in Beispiel 3 verwendete Mineralwolle durch eine 30 mm dicke Mineralwolle, 2,20 kg/m² (Isover akustik®) ersetzt wurde. Die Messung der Trittschallminderung erfolgte wie in Beispiel 3. Die Ergebnisse sind in nachfolgender Tabelle wiedergegeben.

| | Beispiel 3 | Beispiel 4 |
|---|---|---|
| Trittschallminderung ΔL_{w} | 23 dB | 28 dB |
| Trittschallminderung ΔLₗᵢₙ | 10 dB | 15 dB |
| C_{l,Δ} | -13 dB | -13 dB |
| C_{l,r} | 2 dB | 2 dB |
| C_{l,r,50-2500} | 4 dB | 6 dB |

Die Ergebnisse zeigen eine ausgezeichnete Trittschalldämmung durch die erfindungsgemäßen Bodenkonstruktionen.

### Belastungsprüfung

### Beispiel 5

Es wurde eine Bodenkonstruktion wie in Beispiel 1 verlegt, mit folgenden Ausnahmen: Die Bodenkonstruktion wurde auf einer Fläche von 30 x 30 cm verlegt. Die Dicke der Estrichschicht betrug 15 mm. Als Dämmschicht wurde eine 15 mm dicke Mineralwolle (Isover Akustik®) verwendet.

### Vergleichsbeispiel

Beispiel 5 wurde wiederholt, außer dass das 3D-Gewebe nicht in den Estrich eingebaut wurde.

### Belastungstest

Die Bodenkonstruktionen von Beispiel 5 und von dem Vergleichsbeispiel wurden einem Belastungstest unterworfen. Die Prüfung des Eindrucksverhaltens erfolgte 14 d nach Erstellung der Konstruktion. Geprüft wurde mit einem rechteckigen Eindruckstempel von 40 x 10 mm. Die Belastung erfolgte mittig, am Rand und in der Ecke der Konstruktionen. Der Abbruch der Belastung erfolgte bei Kraftabfall bzw. wahrnehmbarem Riss und nachfolgendem Einbruch des Prüfstempels. In der nachfolgenden Tabelle sind die Ergebnisse zusammengestellt.

| Prüfaufbau / Belastung | Kraftmaximum in KN | Verformung bis Bruch in mm | Druckfestigkeit in N/mm² |
|---|---|---|---|
| Bsp. 5 Mitte | 8,3 | 12,9 | 20,8 |
| Bsp. 5 Rand | 9,0 | 12,0 | 22,6 |
| Bsp. 5 Ecke | 3,2 | 10,6 | 8,1 |
| Vgl.-Bsp. Mitte | 1,1 | 5,7 | 2,7 |
| Vgl.-Bsp. Rand | nicht prüfbar | Platte zersprungen | |
| Vgl.-Bsp. Ecke | nicht prüfbar | Platte zersprungen | |

Die erfindungsgemäße Bodenkonstruktion von Beispiel 5 zeigt eine deutlich bessere Belastbarkeit verglichen zur Bodenkonstruktion von dem Vergleichsbeispiel.

## Patentansprüche

1. Bodenkonstruktion auf einem Untergrund umfassend einen Estrich mit einer Bewehrung mit einer unteren und einer oberen Textillage, wobei die untere Textillage in der unteren Hälfte des Estrichs und die obere Textillage in der oberen Hälfte des Estrichs angeordnet ist, **dadurch gekennzeichnet, dass** die Bewehrung aus einem 3D-Textil ist, wobei die genannten Textillagen mit einem oder mehreren Polfäden miteinander verbunden sind.

2. Bodenkonstruktion nach Anspruch 1, **dadurch gekennzeichnet, dass** zwischen dem Untergrund und dem Estrich eine Dämmschicht, bevorzugt eine Mineralwoll-Dämmschicht, angeordnet ist.

3. Bodenkonstruktion nach Anspruch 1 oder Anspruch 2, **dadurch gekennzeichnet, dass** der Estrich ein Verbundestrich, ein Estrich ohne Verbund oder bevorzugt ein schwimmender Estrich ist.

4. Bodenkonstruktion nach irgendeinem der Ansprüche 1 bis 3, **dadurch gekennzeichnet, dass** an der unteren Textillage ein flächiges Material, insbesondere ein Faservlies, befestigt ist.

5. Bodenkonstruktion nach irgendeinem der Ansprüche 1 bis 4, **dadurch gekennzeichnet, dass** die untere Textillage sich im Boden des Estrichs befindet und/oder die obere Textillage sich im oberen Drittel, vorzugsweise im oberen Viertel, des Estrichs, befindet.

6. Bodenkonstruktion nach irgendeinem der Ansprüche 1 bis 5, **dadurch gekennzeichnet, dass** der Estrich ein Schichtdicke von 5 bis 40 mm, bevorzugt 10 bis 15 mm, aufweist.

7. Bodenkonstruktion nach irgendeinem der Ansprüche 1 bis 6, **dadurch gekennzeichnet, dass** die obere und untere Textillage ein Gewebe, ein biaxiales Gitter oder ein Gelege sind.

8. Bodenkonstruktion nach irgendeinem der Ansprüche 1 bis 7, **dadurch gekennzeichnet, dass** die obere und untere Textillage aus Fasern aus Glas, Basalt, organischem Polymer, insbesondere Aramid, oder Carbon gebildet sind, wobei Glasfasern bevorzugt sind.

9. Bodenkonstruktion nach irgendeinem der Ansprüche 1 bis 8, **dadurch gekennzeichnet, dass** die die obere und untere Textillage aus mit einer Schutzschicht versehenen Fasern, bevorzugt Glasfasern, gebildet sind.

10. Bodenkonstruktion nach irgendeinem der Ansprüche 1 bis 9, **dadurch gekennzeichnet, dass** sie ferner einen Bodenbelag über dem Estrich und/oder mindestens eine Trennschicht und/oder eine Bodenheizung, insbesondere eine elektrische Fussbodenheizung, unter oder über dem Estrich umfasst.

11. Bodenkonstruktion nach irgendeinem der Ansprüche 1 bis 9, **dadurch gekennzeichnet, dass** sie eine Bodenkonstruktion für Wohnbauten, öffentliche Bauten, Industrie- und Gewerbebauten oder Schiffe ist, wobei es sich vorzugsweise um eine Fussbodenkonstruktion handelt.

12. Verfahren zur Herstellung einer Bodenkonstruktion auf einem Untergrund nach irgendeinem der Ansprüche 1 bis 11, gekennzeichnet weiter durch die folgenden Schritte
a) Verlegen des 3D-Textils auf dem Untergrund oder auf einer über dem Untergrund befindlichen Schicht und
b) Verfüllen des 3D-Textils mit einem Estrichmaterial, insbesondere einem Mörtel oder einer Spachtelmasse, und Aushärten zur Bildung des bewehrten Estrichs, wobei das Estrichmaterial bevorzugt selbstnivellierend ist.

13. Verfahren nach Anspruch 12, **dadurch gekennzeichnet, dass** vor dem Verlegen des 3D-Textils eine Dämmschicht auf den Untergrund oder auf einer über dem Untergrund befindlichen Schicht verlegt wird.

14. Verfahren nach Anspruch 12 oder Anspruch 13, **dadurch gekennzeichnet, dass** ein flächiges Material, insbesondere ein Faservlies, an der unteren Textillage des 3D-Textils befestigt wird, bevorzugt durch Kleben.

15. Verwendung eines 3D-Textils mit zwei Textillagen, die mit einem oder mehreren Polfäden miteinander verbunden sind, als Bewehrung in einem Estrich in einer Bodenkonstruktion.

## Claims

1. Floor structure on a substrate comprising a screed with a reinforcement system with a lower and an upper textile ply, where the lower textile ply is arranged in the lower half of the screed and the upper textile ply is arranged in the upper half of the screed, **characterized in that** the reinforcement system is made of a 3D textile, where said textile plies are connected to one another by one or more pile filaments.

2. Floor structure according to Claim 1, **characterized in that** between the substrate and the screed an insulation layer is arranged, preferably a mineral wool insulation layer.

3. Floor structure according to Claim 1 or Claim 2, **characterized in that** the screed is a bonded screed, an unbonded screed, or preferably a floating screed.

4. Floor structure according to any of Claims 1 to 3, **characterized in that** secured on the lower textile ply there is a sheet material, in particular a nonwoven fiber fabric.

5. Floor structure according to any of Claims 1 to 4, **characterized in that** the location of the lower textile ply is in the base of the screed and/or the location of the upper textile ply is in the upper third of the screed, preferably in the upper quarter.

6. Floor structure according to any of Claims 1 to 5, **characterized in that** the layer thickness of the screed is from 5 to 40 mm, preferably from 10 to 15 mm.

7. Floor structure according to any of Claims 1 to 6, **characterized in that** the upper and lower textile plies are a woven fabric, a biaxial mesh, or a laid scrim.

8. Floor structure according to any of Claims 1 to 7, **characterized in that** the upper and lower textile plies are preferably composed of fibers made of glass, basalt, organic polymer, in particular aramid, or carbon, preference being given here to glass fibers.

9. Floor structure according to any of Claims 1 to 8, **characterized in that** the upper and lower textile plies are composed of fibers provided with a protective layer, preferably glass fibers.

10. Floor structure according to any of Claims 1 to 9, **characterized in that** it moreover comprises a floor covering above the screed, and/or at least one separating layer and/or a floor-heating system, in particular an electrical indoor-floor-heating system, below or above the screed.

11. Floor structure according to any of Claims 1 to 9, **characterized in that** it is a floor structure for residential buildings, public buildings, industrial buildings, and commercial buildings, or for ships, preferably being an indoor floor structure.

12. Process for the production of a floor structure on a substrate according to any of Claims 1 to 11, characterized further by the following steps:
a) laying of the 3D textile on the substrate or on a layer located above the substrate, and
b) filling of the 3D textile with a screed material, in particular a mortar or a troweling composition, and hardening to form the reinforced screed, where the screed material is preferably self-leveling.

13. Process according to Claim 12, **characterized in that**, before the laying of the 3D textile, an insulation layer is laid on the substrate or on a layer located above the substrate.

14. Process according to Claim 12 or Claim 13, **characterized in that** a sheet material, in particular a nonwoven fiber fabric, is secured on the lower textile ply of the 3D textile, preferably by adhesion.

15. Use, as reinforcement system in a screed in a floor structure, of a 3D textile with two textile plies connected to one another by one or more pile filaments.

## Revendications

1. Construction de sol sur un support comprenant une chape dotée d'une armature ayant une couche textile inférieure et supérieure, la couche textile inférieure étant disposée dans la moitié inférieure de la chape et la couche textile supérieure dans la moitié supérieure de la chape, **caractérisée en ce que** l'armature est constituée d'un textile 3D, lesdites couches textiles étant reliées l'une à l'autre par un ou plusieurs fils de poil.

2. Construction de sol selon la revendication 1, **caractérisée en ce qu'**entre le support et la chape est disposée une couche isolante, de préférence une couche isolante en laine de roche.

3. Construction de sol selon la revendication 1 ou la revendication 2, **caractérisée en ce que** la chape est une chape composite, une chape sans adhésion ou de préférence une chape flottante.

4. Construction de sol selon l'une quelconque des revendications 1 à 3, **caractérisée en ce qu'**un matériau de surface, notamment un voile non tissé, est fixé à la couche textile inférieure.

5. Construction de sol selon l'une quelconque des revendications 1 à 4, **caractérisée en ce que** la couche textile inférieure se trouve dans le fond de la chape et/ou la couche textile supérieure se trouve dans le tiers supérieur, de préférence dans le quart supérieur de la chape.

6. Construction de sol selon l'une quelconque des revendications 1 à 5, **caractérisée en ce que** la chape présente une épaisseur de couche de 5 à 40 mm, de préférence de 10 à 15 mm.

7. Construction de sol selon l'une quelconque des revendications 1 à 6, **caractérisée en ce que** les couches textiles supérieure et inférieure sont un tissu, un treillis biaxial ou un non-tissé.

8. Construction de sol selon l'une quelconque des revendications 1 à 7, **caractérisée en ce que** les couches textiles supérieure et inférieure sont formées de fibres, de verre, de basalte, de polymère organique, notamment d'aramide, ou de carbone, des fibres de verre étant préférées.

9. Construction de sol selon l'une quelconque des revendications 1 à 8, **caractérisée en ce que** les couches textiles supérieure et inférieure sont formées de fibres, de préférence de fibres de verre, pourvues d'une couche protectrice.

10. Construction de sol selon l'une quelconque des revendications 1 à 9, **caractérisée en ce qu'**elle comporte en outre un revêtement de sol au-dessus de la chape et/ou au moins une couche de séparation et/ou un chauffage au sol, notamment un plancher chauffant électrique, au-dessous ou au-dessus de la chape.

11. Construction de sol selon l'une quelconque des revendications 1 à 9, **caractérisée en ce qu'**elle est une construction de sol pour des bâtiments résidentiels, des bâtiments publics, des bâtiments industriels ou commerciaux ou des navires, en étant de préférence une construction de plancher.

12. Procédé de fabrication d'une construction de sol sur un support selon l'une quelconque des revendications 1 à 11, caractérisé en plus par les étapes suivantes
a) pose du textile 3D sur le support ou sur une couche qui se trouve au-dessus du support et
b) remplissage du textile 3D avec un matériau de chape, notamment un mortier ou une pâte de rejointement, et durcissement en vue de former la chape armée, le matériau de chape étant de préférence autonivelant.

13. Procédé selon la revendication 12, **caractérisé en ce qu'**une couche isolante est posée sur le support ou sur une couche qui se trouve au-dessus du support avant de poser le textile 3D.

14. Procédé selon la revendication 12 ou la revendication 13, **caractérisé en ce qu'**un matériau de surface, notamment un voile non tissé, est fixé à la couche textile inférieure du textile 3D, de préférence par collage.

15. Utilisation d'un textile 3D ayant deux couches textiles, lesquelles sont reliées l'une à l'autre par un ou plusieurs fils de poil, en tant qu'armature dans une chape dans une construction de sol.
